# EUROPEAN PATENT SPECIFICATION

(11) **EP 3 838 702 B1**
(45) Date of publication and mention of the grant of the patent: **06.08.2025**
(21) Application number: 20212817.9
(22) Date of filing: 09.12.2020
(51) Int. Cl.: B60W 60/00

(54) **PREVENTION, DETECTION AND HANDLING OF TIRE BLOWOUTS ON AUTONOMOUS TRUCKS**
VORBEUGUNG, ERKENNUNG UND HANDHABUNG VON REIFENPANNEN AN AUTONOMEN LASTKRAFTWAGEN
PRÉVENTION, DÉTECTION ET TRAITEMENT DES ÉCLATEMENTS DE PNEUS SUR LES CAMIONS AUTONOMES

(30) Priority: 16.12.2019 US 201916714967
(43) Date of publication of application: 23.06.2021
(73) Proprietor: WAYMO LLC, Mountain View, CA 94043 (US)
(72) Inventor: Patnaik, Vijaysai, Mountain View, CA 94043 (US); Grossman, William, Mountain View, CA 94043 (US)
(74) Representative: Anderson, Oliver Ben

(56) References cited:
- WO-A1-2014/148988
- WO-A1-2018/026603
- WO-A1-2019/048046
- CN-A- 107 379 898
- CN-A- 107 867 130
- CN-A- 109 606 034
- US-A1- 2002 196 138
- US-A1- 2019 155 289
- BLOOMER STEVE ET AL: "Compensation of magnetic data for autonomous underwater vehicle mapping surveys", 2014 IEEE/OES AUTONOMOUS UNDERWATER VEHICLES (AUV), IEEE, 6 October 2014 (2014-10-06), pages 1 - 4, XP032741983, DOI: 10.1109/AUV.2014.7054417

## Description

### BACKGROUND

Autonomous vehicles, such as vehicles that do not require a human driver, can be used to aid in the transport of trailered (e.g., towed) cargo, such as freight, livestock or other items from one location to another. Such vehicles may operate in a fully autonomous mode or a partially autonomous mode where a person may provide some driving input. Regardless of the driving mode, tire blowouts are significant events that can be dangerous for the autonomous vehicle and other road users.

WO 2018/026603 A1 describes determine an optimal lane trajectory and route for an autonomous vehicle under changing road conditions and forecast autonomous car performance along a route. A road's profile is analyzed to determine a safe lateral lane position. In ice or snow, a vehicle may follow ruts made by previous vehicles, even if following such ruts does not place a vehicle in a lane's center.

CN 107 867 130 A describes a method and a system for detecting puncture risks of unmanned port vehicles. WO 2014/148988 A1 autonomously navigates around pointy rocks in order to avoid tire punctures.

### BRIEF SUMMARY

The technology involves self-driving cargo trucks and other types of self-driving vehicles (SDVs). In particular, aspects of the technology relate to how tire blowouts on SDVs can be addressed. This can include prevention, detection and handling of vehicle responses should a blowout occur.

The matter for protection is defined by the claims.

According to one aspect, a method of performing tire evaluation for an autonomous vehicle is provided. The method comprises obtaining, by one or more processors of the autonomous vehicle, baseline information for a set of tires of the autonomous vehicle; receiving, by the one or more processors during driving of the autonomous vehicle, sensor data regarding at least one tire of the set of tires; updating a dynamics model for the set of tires based on the baseline information and the received sensor data; receiving, by the one or more processors, information regarding a roadway condition for a portion of a roadway, wherein the received information includes an indication that the autonomous vehicle will encounter an obstacle on the portion of the roadway; determining by the one or more processors, based on the updated dynamics model and in view of the received information, whether a possibility of a tire failure for the at least one tire in the set exceeds a threshold possibility; and upon determining that the threshold possibility is exceeded, the one or more processors causing the autonomous vehicle to take a corrective action.

For instance, the obstacle may be a pothole. The received information may further include information regarding an environmental condition, which may be an ambient temperature. The sensor data regarding the at least one tire may be pressure data, temperature data or shape data. Here, the pressure data can be obtained from a tire pressure monitoring system.

In another example, the sensor data regarding the at least one tire is received from a camera or lidar sensor of the autonomous vehicle. For instance, the sensor data may include a thermal image from an infrared camera of the autonomous vehicle. The corrective action may include adjusting a position of the autonomous vehicle within a lane to minimize possible impact with an obstacle on the portion of the roadway. The possibility of a tire failure may be, e.g., one of a blowout, slow leak, tread damage, sidewall damage or rim damage.

In a further example, the method also includes detecting a failure of the at least one tire of the set of tires and, in response to detecting the failure, the corrective action is selected from the group consisting of: adjusting a position of the autonomous vehicle within a lane to minimize possible impact with an obstacle on the portion of the roadway; pulling over and monitoring tire pressure for a first selected period of time; continuing driving and performing enhanced monitoring of the at least one tire for a second selected period of time; evaluating whether the at least one tire is safety critical for a current driving operation; changing a route of the autonomous vehicle; or notifying a remote service or another vehicle about the roadway conditions for the portion of a roadway.

Obtaining the baseline information may include performing one or more driving maneuvers to obtain data about the set of tires. And the method may further comprise training the dynamics model based on tire information received from a plurality of other autonomous vehicles.

According to another aspect, a control system according to claim 14 is provided.

The sensor data regarding the at least one tire may be pressure data, temperature data or shape data. The sensor data regarding the at least one tire can be received from a camera or lidar sensor of the perception system. The control system may be configured to obtain the baseline information by causing the driving system to perform one or more driving maneuvers.

In one scenario, the control system is further configured to detect a failure of the at least one tire of the set of tires and, in response to detection of the failure, the corrective action is selected from the group consisting of: adjust a position of the autonomous vehicle within a lane to minimize possible impact with an obstacle on the portion of the roadway; pull over and monitor tire pressure for a first selected period of time; continue driving and perform enhanced monitoring of the at least one tire for a second selected period of time; evaluate whether the at least one tire is safety critical for a current driving operation; change a route of the autonomous vehicle; or notify a remote service or another vehicle about the roadway conditions for the portion of a roadway.

### BRIEF DESCRIPTION OF THE DRAWINGS

Figs. 1A-B illustrates an example cargo vehicle arrangement for use with aspects of the technology.
Fig. 1C illustrates an example passenger vehicle arrangement for use with aspects of the technology.
Figs. 2A-B are functional diagrams of an example tractor-trailer vehicle in accordance with aspects of the disclosure.
Fig. 3 is a function diagram of an example passenger vehicle in accordance with aspects of the disclosure.
Figs. 4A-C illustrate example sensor fields of view for use with aspects of the technology.
Figs. 5A-B illustrate a tire evaluation scenario in accordance with aspects of the technology.
Fig. 6 illustrates a vehicle shifting scenario in accordance with aspects of the technology.
Fig. 7 illustrates a cargo shifting scenario in accordance with aspects of the technology.
Fig. 8 illustrates an obstruction scenario in accordance with aspects of the technology.
Figs. 9A-B illustrate an example arrangement in accordance with aspects of the technology.
Fig. 10 illustrates an example method of operating a vehicle in accordance with aspects of the technology.

### DETAILED DESCRIPTION

The technology involves prediction of a likelihood of tire failure, including actions the vehicle may take to reduce the likelihood of failure. The technology also involves pre-trip and real-time system checks, and performing corrective actions should a tire fail. While many of the examples presented below involve commercial cargo vehicles, aspects of the technology may be employed with other types of vehicles.

Tire blowouts and other tire failures can occur due to various causes. For instance, underinflation may lead to overheating. A Tire Pressure Monitoring System (TPMS) can help with the status, but may not issue a pressure alert until a tire is significantly underinflated and by then that may be too late. Another factor is overloading the vehicle beyond its Gross Vehicular Weight Rating. Events during driving, such as passing over a pothole or encountering road debris can also cause tire failures such as a blowout, slow leak or physical damage that can affect tire integrity (e.g., tread or sidewall damage, rim damage, etc.). Environmental and component-related factors, such as extreme heat during the summer or the gradual wearing down of the tire, can also contribute to the likelihood of a blowout. However, it is recognized that tire failures may occur due to a combination of factors rather than a single issue. Thus, aspects of the technology involve monitoring different variables in real time that might contribute to a blowout or other failure. These aspects are discussed in detail below.

### EXAMPLE VEHICLE SYSTEMS

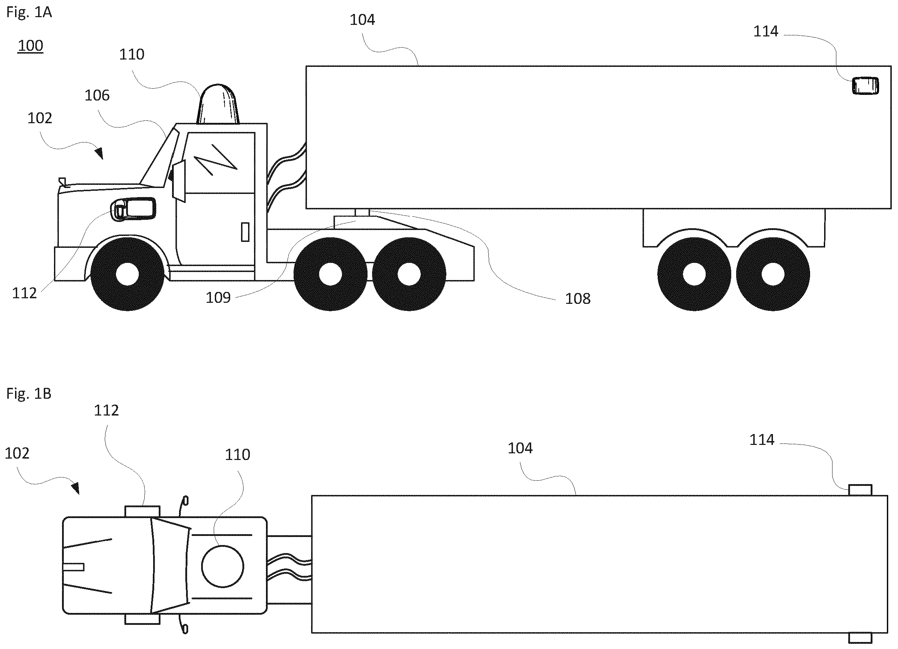

Figs. 1A-B illustrates an example cargo vehicle 100, such as a tractor-trailer truck, and Fig. 1B illustrates an example passenger vehicle 150, such as a minivan. The cargo vehicle 100 may include, e.g., a single, double or triple trailer, or may be another medium or heavy duty truck such as in commercial weight classes 4 through 8. As shown, the truck includes a tractor unit 102 and a single cargo unit or trailer 104. The trailer 104 may be fully enclosed, open such as a flat bed, or partially open depending on the freight or other type of cargo (e.g., livestock) to be transported. The tractor unit 102 includes the engine and steering systems (not shown) and a cab 106 for a driver and any passengers. In a fully autonomous arrangement, the cab 106 may not be equipped with seats or manual driving components, since no person may be necessary.

The trailer 104 includes a hitching point 108, known as a kingpin. The kingpin is configured to pivotally attach to the tractor unit. In particular, the kingpin attaches to a trailer coupling, known as a fifth-wheel 109, that is mounted rearward of the cab. Sensor units may be deployed along the tractor unit 102 and/or the trailer 104. The sensor units are used to detect information about the surroundings around the cargo vehicle 100. For instance, as shown the tractor unit 102 may include a roof-mounted sensor assembly 110 and one or more side sensor assemblies 112, and the trailer 104 may employ one or more sensor assemblies 114, for example mounted on the left and/or right sides of the trailer 104. In some examples, the tractor unit 102 and trailer 104 also may include other various sensors for obtaining information about the tractor unit 102's and/or trailer 104's interior spaces, including the cargo hold of the trailer.

Similarly, the passenger vehicle 150 may include various sensors for obtaining information about the vehicle's external environment. For instance, a roof-top housing 152 may include a lidar sensor as well as various cameras and/or radar units. Housing 154, located at the front end of vehicle 150, and housings 156a, 156b on the driver's and passenger's sides of the vehicle may each incorporate a lidar sensor and/or other sensors such as cameras and radar. For example, housing 156a may be located in front of the driver's side door along a quarterpanel of the vehicle. As shown, the passenger vehicle 150 also includes housings 158a, 158b for radar units, lidar and/or cameras also located towards the rear roof portion of the vehicle. Additional lidar, radar units and/or cameras (not shown) may be located at other places along the vehicle 100. For instance, arrow 160 indicates that a sensor unit may be positioned along the read of the vehicle 150, such as on or adjacent to the bumper. In some examples, the passenger vehicle 150 also may include various sensors for obtaining information about the vehicle 150's interior spaces.

While certain aspects of the disclosure may be particularly useful in connection with specific types of vehicles, the vehicle may be any type of vehicle including, but not limited to, cars, trucks, motorcycles, buses, recreational vehicles, etc.

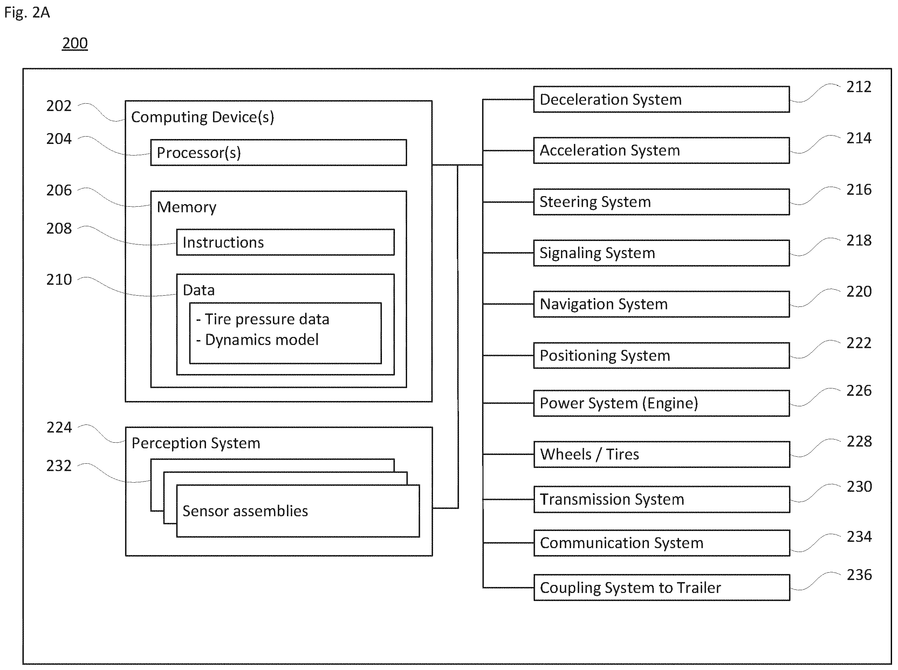

Fig. 2A illustrates a block diagram 200 with various components and systems of a cargo vehicle (e.g., as shown in Figs. 1A-B), such as a truck, farm equipment or construction equipment, configured to operate in a fully or semi-autonomous mode of operation. By way of example, there are different degrees of autonomy that may occur for a vehicle operating in a partially or fully autonomous driving mode. The U.S. National Highway Traffic Safety Administration and the Society of Automotive Engineers have identified different levels to indicate how much, or how little, the vehicle controls the driving. For instance, Level 0 has no automation and the driver makes all driving-related decisions. The lowest semi-autonomous mode, Level 1, includes some drive assistance such as cruise control. Level 2 has partial automation of certain driving operations, while Level 3 involves conditional automation that can enable a person in the driver's seat to take control as warranted. In contrast, Level 4 is a high automation level where the vehicle is able to drive without assistance in select conditions. And Level 5 is a fully autonomous mode in which the vehicle is able to drive without assistance in all situations. The architectures, components, systems and methods described herein can function in any of the semi or fully-autonomous modes, e.g., Levels 1-5, which are referred to herein as "autonomous" driving modes. Thus, reference to an autonomous driving mode includes both partial and full autonomy.

As shown in the block diagram of Fig. 2A, the vehicle includes a control system of one or more computing devices, such as computing devices 202 containing one or more processors 204, memory 206 and other components typically present in general purpose computing devices. The control system may constitute an electronic control unit (ECU) of a tractor unit or other computing system of the vehicle. The memory 206 stores information accessible by the one or more processors 204, including instructions 208 and data 210 that may be executed or otherwise used by the processor 204. The memory 206 may be of any type capable of storing information accessible by the processor, including a computing device-readable medium. The memory is a non-transitory medium such as a hard-drive, memory card, optical disk, solid-state, tape memory, or the like. Systems may include different combinations of the foregoing, whereby different portions of the instructions and data are stored on different types of media.

The instructions 208 may be any set of instructions to be executed directly (such as machine code) or indirectly (such as scripts) by the processor. For example, the instructions may be stored as computing device code on the computing device-readable medium. In that regard, the terms "instructions" and "programs" may be used interchangeably herein. The instructions may be stored in object code format for direct processing by the processor, or in any other computing device language including scripts or collections of independent source code modules that are interpreted on demand or compiled in advance. The data 210 may be retrieved, stored or modified by one or more processors 204 in accordance with the instructions 208. In one example, some or all of the memory 206 may be an event data recorder or other secure data storage system configured to store vehicle diagnostics and/or detected sensor data, which may be on board the vehicle or remote, depending on the implementation. As illustrated in Fig. 2A, the data may include information about the tires (e.g., a tire dynamics model based on tire pressure data, tire age, rotation history, etc.) and/or the vehicle (e.g., current loaded weight, trip and/or total mileage, planned route, component status, a general model of the vehicle, etc.).

The one or more processor 204 may be any conventional processors, such as commercially available CPUs. Alternatively, the one or more processors may be a dedicated device such as an ASIC or other hardware-based processor. Although Fig. 2A functionally illustrates the processor(s), memory, and other elements of computing devices 202 as being within the same block, such devices may actually include multiple processors, computing devices, or memories that may or may not be stored within the same physical housing. Similarly, the memory 206 may be a hard drive or other storage media located in a housing different from that of the processor(s) 204. Accordingly, references to a processor or computing device will be understood to include references to a collection of processors or computing devices or memories that may or may not operate in parallel.

In one example, the computing devices 202 may form an autonomous driving computing system incorporated into vehicle 100. The autonomous driving computing system may capable of communicating with various components of the vehicle. For example, returning to Fig. 2A, the computing devices 202 may be in communication with various systems of the vehicle, including a driving system including a deceleration system 212 (for controlling braking of the vehicle), acceleration system 214 (for controlling acceleration of the vehicle), steering system 216 (for controlling the orientation of the wheels and direction of the vehicle), signaling system 218 (for controlling turn signals), navigation system 220 (for navigating the vehicle to a location or around objects) and a positioning system 222 (for determining the position of the vehicle).

The computing devices 202 are also operatively coupled to a perception system 224 (for detecting objects in the vehicle's environment), a power system 226 (for example, a battery and/or gas or diesel powered engine) and a transmission system 230 in order to control the movement, speed, etc., of the vehicle in accordance with the instructions 208 of memory 206 in an autonomous driving mode which does not require or need continuous or periodic input from a passenger of the vehicle. Some or all of the wheels/tires 228 are coupled to the transmission system 230, and the computing devices 202 may be able to receive information about tire pressure (e.g., TMPS data), balance and other factors that may impact driving in an autonomous mode.

The computing devices 202 may control the direction and speed of the vehicle by controlling various components. By way of example, computing devices 202 may navigate the vehicle to a destination location completely autonomously using data from the map information and navigation system 220. Computing devices 202 may use the positioning system 222 to determine the vehicle's location and the perception system 224 to detect and respond to objects when needed to reach the location safely. In order to do so, computing devices 202 may cause the vehicle to accelerate (e.g., by increasing fuel or other energy provided to the engine by acceleration system 214), decelerate (e.g., by decreasing the fuel supplied to the engine, changing gears, and/or by applying brakes by deceleration system 212), change direction (e.g., by turning the front or other wheels of vehicle 100 by steering system 216), and signal such changes (e.g., by lighting turn signals of signaling system 218). Thus, the acceleration system 214 and deceleration system 212 may be a part of a drivetrain or other transmission system 230 that includes various components between an engine of the vehicle and the wheels of the vehicle. Again, by controlling these systems, computing devices 202 may also control the transmission system 230 of the vehicle in order to maneuver the vehicle autonomously.

As an example, computing devices 202 may interact with deceleration system 212 and acceleration system 214 in order to control the speed of the vehicle. Similarly, steering system 216 may be used by computing devices 202 in order to control the direction of vehicle. For example, if the vehicle is configured for use on a road, such as a tractor-trailer truck or a construction vehicle, the steering system 216 may include components to control the angle of wheels of the tractor unit 102 to turn the vehicle. Signaling system 218 may be used by computing devices 202 in order to signal the vehicle's intent to other drivers or vehicles, for example, by lighting turn signals or brake lights when needed.

Navigation system 220 may be used by computing devices 202 in order to determine and follow a route to a location. In this regard, the navigation system 220 and/or memory 206 may store map information, e.g., highly detailed maps that computing devices 202 can use to navigate or control the vehicle. As an example, these maps may identify the shape and elevation of roadways, lane markers, intersections, crosswalks, speed limits, traffic signal lights, buildings, signs, real time traffic information, vegetation, or other such objects and information. The lane markers may include features such as solid or broken double or single lane lines, solid or broken lane lines, reflectors, etc. A given lane may be associated with left and right lane lines or other lane markers that define the boundary of the lane. Thus, most lanes may be bounded by a left edge of one lane line and a right edge of another lane line.

The perception system 224 also includes sensors for detecting objects external to the vehicle and/or aspects of the vehicle itself (e.g., tire status). The detected objects may be other vehicles, obstacles in the roadway, traffic signals, signs, trees, etc. For example, the perception system 224 may include one or more lidar sensors, sonar devices, radar units, cameras (e.g., optical and/or infrared), acoustic sensors, inertial sensors (e.g., gyroscopes or accelerometers), and/or any other detection devices that record data which may be processed by computing devices 202. The sensors of the perception system 224 may detect objects and their characteristics such as location, orientation, size, shape, type (for instance, vehicle, pedestrian, bicyclist, etc.), heading, and speed of movement, etc. The raw data from the sensors and/or the aforementioned characteristics can sent for further processing to the computing devices 202 periodically and continuously as it is generated by the perception system 224. Computing devices 202 may use the positioning system 222 to determine the vehicle's location and perception system 224 to detect and respond to objects when needed to reach the location safely. In addition, the computing devices 202 may perform calibration of individual sensors, all sensors in a particular sensor assembly, or between sensors in different sensor assemblies.

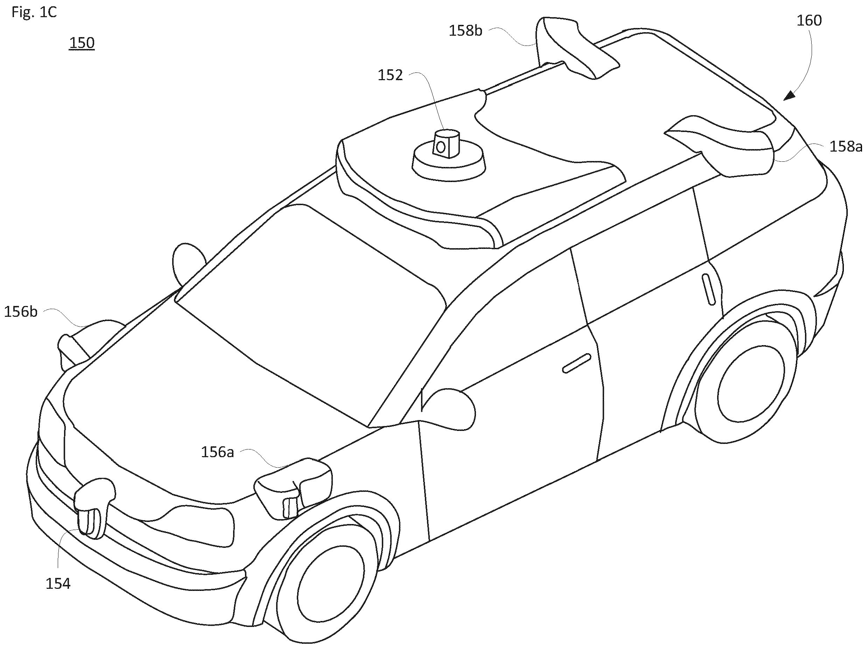

As indicated in Fig. 2A, the sensors of the perception system 224 may be incorporated into one or more sensor assemblies 232. In one example, the sensor assemblies 232 may be arranged as sensor towers integrated into the side-view mirrors on the truck, farm equipment, construction equipment or the like. Sensor assemblies 232 may also be positioned at different locations on the tractor unit 102 or on the trailer 104 (see Figs. 1A-B), or along different portions of passenger vehicle 150 (see Fig. 1C). The computing devices 202 may communicate with the sensor assemblies located on both the tractor unit 102 and the trailer 104 or distributed along the passenger vehicle 150. Each assembly may have one or more types of sensors such as those described above.

Also shown in Fig. 2A is a communication system 234 and a coupling system 236 for connectivity between the tractor unit and the trailer. The coupling system 236 includes a fifth-wheel at the tractor unit and a kingpin at the trailer. The communication system 234 may include one or more wireless network connections to facilitate communication with other computing devices, such as passenger computing devices within the vehicle, and computing devices external to the vehicle, such as in another nearby vehicle on the roadway or at a remote network. The network connections may include short range communication protocols such as Bluetooth^{™}, Bluetooth low energy (LE), cellular connections, as well as various configurations and protocols including the Internet, World Wide Web, intranets, virtual private networks, wide area networks, local networks, private networks using communication protocols proprietary to one or more companies, Ethernet, WiFi and HTTP, and various combinations of the foregoing.

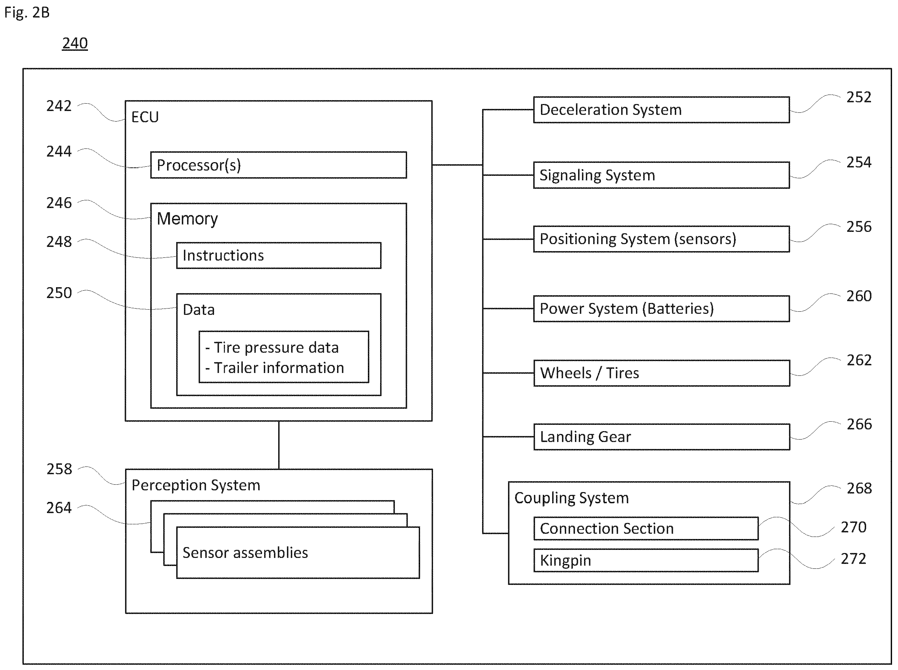

Fig. 2B illustrates a block diagram 240 of an example trailer. As shown, the system includes an ECU 242 of one or more computing devices, such as computing devices containing one or more processors 244, memory 246 and other components typically present in general purpose computing devices. The memory 246 stores information accessible by the one or more processors 244, including instructions 248 and data 250 that may be executed or otherwise used by the processor(s) 244. The descriptions of the processors, memory, instructions and data from Fig. 2A apply to these elements of Fig. 2B. As illustrated in Fig. 2B, the data 250 may include information about the trailer's tires (e.g., tire pressure data, tire age, rotation history, etc.) and/or the trailer itself (e.g., current loaded weight, trip and/or total mileage, etc.).

The ECU 242 is configured to receive information and control signals from the trailer unit. The on-board processors 244 of the ECU 242 may communicate with various systems of the trailer, including a deceleration system 252 (for controlling braking of the trailer), signaling system 254 (for controlling turn signals), and a positioning system 256 (for determining the position of the trailer). The processors 244 may receive TPMS data from the trailer's tires.

The ECU 242 may also be operatively coupled to a perception system 258 (for detecting objects in the trailer's environment and/or aspects of the trailer itself) and a power system 260 (for example, a battery power supply) to provide power to local components. Some or all of the wheels/tires 262 of the trailer may be coupled to the deceleration system 252, and the processors 244 may be able to receive information about tire pressure, balance, wheel speed and other factors that may impact driving in an autonomous mode, and to relay that information to the processing system of the tractor unit. The deceleration system 252, signaling system 254, positioning system 256, perception system 258, power system 260 and wheels/tires 262 may operate in a manner such as described above with regard to Fig. 2A. For instance, the perception system 258, if employed as part of the trailer, may include at least one sensor assembly 264 having one or more lidar sensors, sonar devices, radar units, cameras, inertial sensors, and/or any other detection devices that record data which may be processed by the ECU 242 or by the processors 204 of the tractor unit.

The trailer may also include a set of landing gear 266, as well as a coupling system 268. The landing gear 266 provide a support structure for the trailer when decoupled from the tractor unit. The coupling system 268, which may be a part of coupling system 236 of the tractor unit, provides connectivity between the trailer and the tractor unit. The coupling system 268 may include a connection section 270 to provide backward compatibility with legacy trailer units that may or may not be capable of operating in an autonomous mode. The coupling system includes a kingpin 272 configured for enhanced connectivity with the fifth-wheel of an autonomous-capable tractor unit.

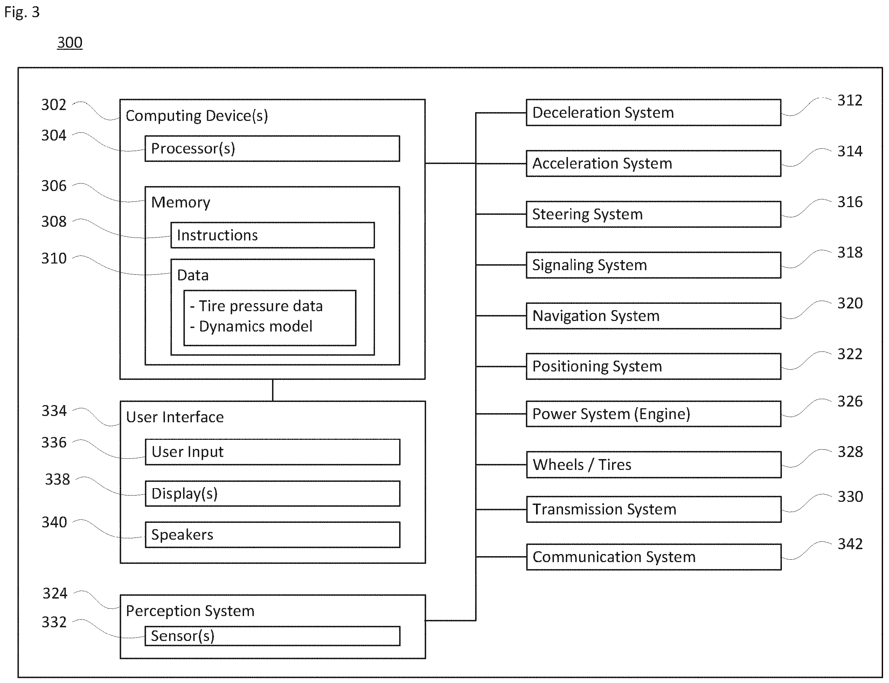

Fig. 3 illustrates a block diagram 300 of various systems of a passenger vehicle. As shown, the system includes one or more computing devices 302, such as computing devices containing one or more processors 304, memory 306 and other components typically present in general purpose computing devices. The memory 306 stores information accessible by the one or more processors 304, including instructions 308 and data 310 that may be executed or otherwise used by the processor(s) 304. The descriptions of the processors, memory, instructions and data from Fig. 2A apply to these elements of Fig. 3.

As with the computing devices 202 of Fig. 2A, the computing devices 302 of Fig. 3 may control computing devices of an autonomous driving computing system or incorporated into a passenger vehicle. The autonomous driving computing system may be capable of communicating with various components of the vehicle in order to control the movement of the passenger vehicle according to primary vehicle control code of memory 306. For example, computing devices 302 may be in communication with various, such as deceleration system 312, acceleration system 314, steering system 316, signaling system 318, navigation system 320, positioning system 322, perception system 324, power system 326 (e.g., the vehicle's engine or motor), transmission system 330 in order to control the movement, speed, etc. of the in accordance with the instructions 208 of memory 306. The wheels/tires 328 may be controlled directly by the computing devices 302 or indirectly via these other systems. These components and subsystems may operate as described above with regard to Fig. 2A. For instance, the perception system 324 also includes one or more sensors 332 for detecting objects external to the vehicle. The sensors 332 may be incorporated into one or more sensor assemblies as discussed above.

Computing devices 202 may include all of the components normally used in connection with a computing device such as the processor and memory described above as well as a user interface subsystem 334. The user interface subsystem 334 may include one or more user inputs 336 (e.g., a mouse, keyboard, touch screen and/or microphone) and various electronic displays 338 (e.g., a monitor having a screen or any other electrical device that is operable to display information). In this regard, an internal electronic display may be located within a cabin of the passenger vehicle (not shown) and may be used by computing devices 302 to provide information to passengers within the vehicle. Output devices, such as speaker(s) 340 may also be located within the passenger vehicle.

The passenger vehicle also includes a communication system 342, which may be similar to the communication system 234 of Fig. 2A. For instance, the communication system 342 may also include one or more wireless network connections to facilitate communication with other computing devices, such as passenger computing devices within the vehicle, and computing devices external to the vehicle, such as in another nearby vehicle on the roadway, or a remote server system. The network connections may include short range communication protocols such as Bluetooth^{™}, Bluetooth low energy (LE), cellular connections, as well as various configurations and protocols including the Internet, World Wide Web, intranets, virtual private networks, wide area networks, local networks, private networks using communication protocols proprietary to one or more companies, Ethernet, WiFi and HTTP, and various combinations of the foregoing.

### EXAMPLE IMPLEMENTATIONS

In view of the structures and configurations described above and illustrated in the figures, various implementations will now be described.

In order to detect the environment and conditions around the vehicle while driving in an autonomous mode, different types of sensors and layouts may be employed. Examples of these were presented above with regard to Figs. 1-3. The field of view for each sensor can depend on the sensor placement on a particular vehicle. In one scenario, the information from one or more different kinds of sensors may be employed so that the tractor-trailer or other vehicle may operate in an autonomous mode. Each sensor may have a different range, resolution and/or field of view (FOV).

For instance, the sensors may include a long range FOV lidar and a short range FOV lidar. In one example, the long range lidar may have a range exceeding 50-250 meters, while the short range lidar has a range no greater than 1-50 meters. Alternatively, the short range lidar may generally cover up to 10-15 meters from the vehicle while the long range lidar may cover a range exceeding 100 meters. In another example, the long range is between 10-200 meters, while the short range has a range of 0-20 meters. In a further example, the long range exceeds 80 meters while the short range is below 50 meters. Intermediate ranges of between, e.g., 10-100 meters can be covered by one or both of the long range and short range lidars, or by a medium range lidar that may also be included in the sensor system. In addition to or in place of these lidars, a set of cameras (e.g., optical and/or infrared) may be arranged, for instance to provide forward, side and rear-facing imagery in and around the vehicle, including in the immediate vicinity of the vehicle (e.g., within less than 2-3 meters around the vehicle). Similarly, a set of radar sensors may also be arranged to provide forward, side and rear-facing data.

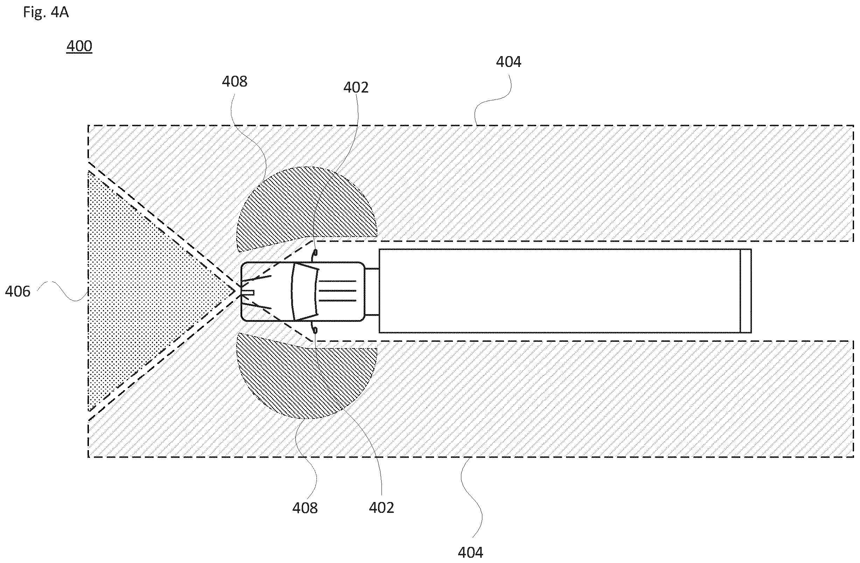

Figs. 4A-B illustrate example sensor configurations and fields of view on a cargo vehicle. In particular, Fig. 4A presents one configuration 400 of lidar, camera and radar sensors. In this figure, one or more lidar units may be located in sensor housing 402. In particular, sensor housings 402 may be located on either side of the tractor unit cab, for instance integrated into a side view mirror assembly. In one scenario, long range lidars may be located along a top or upper area of the sensor housings 402. For instance, this portion of the housing 402 may be located closest to the top of the truck cab or roof of the vehicle. This placement allows the long range lidar to see over the hood of the vehicle. And short range lidars may be located along a bottom area of the sensor housings 402, closer to the ground, and opposite the long range lidars in the housings. This allows the short range lidars to cover areas immediately adjacent to the cab (e.g., up to 1-4 meters from the vehicle). This would allow the perception system to determine whether an object such as another vehicle, pedestrian, bicyclist, etc., is next to the front of the vehicle and take that information into account when determining how to drive or turn in view of an aberrant condition.

As illustrated in Fig. 4A, the long range lidars on the left and right sides of the tractor unit have fields of view 404. These encompass significant areas along the sides and front of the vehicle. As shown, there is an overlap region 406 of their fields of view in front of the vehicle. A space is shown between regions 404 and 406 for clarity; however in actuality there would desirably be overlapping coverage. The short range lidars on the left and right sides have smaller fields of view 408. The overlap region 406 provides the perception system with additional or information about a very important region that is directly in front of the tractor unit. This redundancy also has a safety aspect. Should one of the long range lidar sensors suffer degradation in performance, the redundancy would still allow for operation in an autonomous mode.

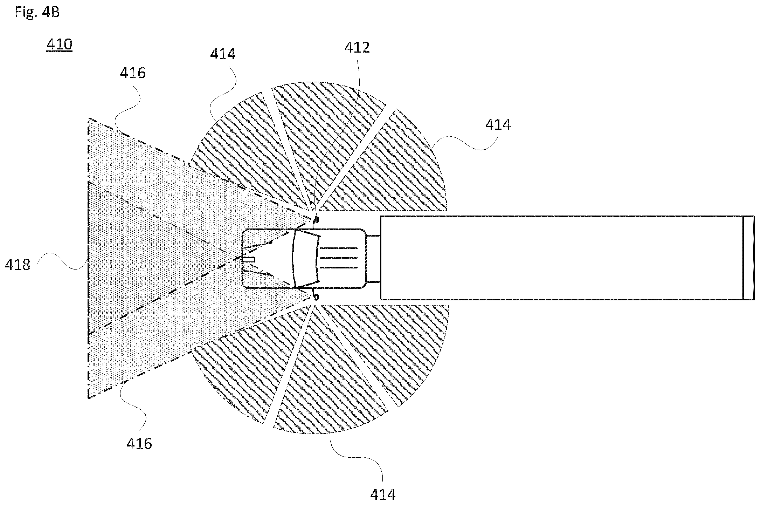

Fig. 4B illustrates coverage 410 for either (or both) of radar and camera sensors on both sides of a tractor-trailer. Here, there may be multiple radar and/or camera sensors in each of the sensor housings 412. As shown, there may be sensors with side and rear fields of view 414 and sensors with forward facing fields of view 416. The sensors may be arranged so that the side and rear fields of view 414 overlap, and the side fields of view may overlap with the forward facing fields of view 416. As with the long range lidars discussed above, the forward facing fields of view 416 also have an overlap region 418. This overlap region provides similar redundancy to the overlap region 406, and has the same benefits should one sensor suffer degradation in performance.

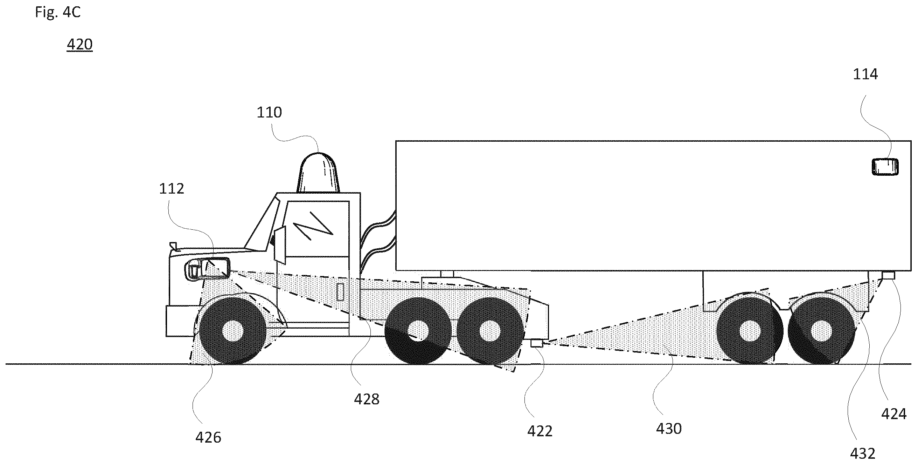

While not illustrated in Figs. 4A-4B, other sensors may be positioned in different locations to obtain information regarding other areas around the vehicle, such as along the rear or underneath the vehicle. By way of example, in the example 420 of Fig. 4C, sensors on or around the cab and trailer can obtain tire-related information. As shown, in addition to sensor assemblies 110, 112 and 114, the vehicle may also include assemblies 422 and/or 424 disposed along the base of the tractor and/or the trailer, or otherwise elsewhere on the chassis. In this example, the sensor assembly 112 on each side of the vehicle may be able to scan the tires along the tractor as seen by example fields of view 426 and 428. Similarly, assembly 422 may have a field of view 430 capable of scanning tires on the trailer (or tractor as well). And assembly 424 may have a field of view 432 capable of scanning tires along the trailer (or tractor as well).

### EXAMPLE SCENARIOS

One facet of prevention is to develop a vehicle dynamics system that can be used to predict a likelihood that a given tire will fail (e.g., suffer a catastrophic loss in pressure or shape) before it happens. For instance, the dynamics system may include information regarding the desired tire pressure (or range of pressures) that can avoid or minimize the likelihood of a blowout or other failure given various factors such as the load weight and distribution, upcoming weather conditions on the route, the number of miles traveled per tire, etc. This information can be stored in memory (e.g., as data 210 of memory 206) as part of a vehicle model, such as a dynamics model of the tires. This model can be used to predict the likelihood of a tire blowout or other tire failure. For instance, if the predicted likelihood of tire failure is high, the vehicle may take one or more preventive actions including changing the route, changing the time when a trip starts or the speed at which the vehicle travels (e.g., to avoid certain weather conditions), and requesting a tire change and/or a change to the load weight or load distribution before departing on the trip or at a service center along the route.

In one aspect, all vehicle servicing and maintenance would be logged and available to the vehicle model. Other factors that can be stored in memory for the model include temperatures (e.g., ambient, road and tires), the number of miles of each tire, axle weight to know tire loading and deformation, and the longitudinal and lateral acceleration from each tire's perspective, which can be a big contributor to general tire wear. Certain information may be easier to obtain for the tractor's tires than the trailer's tires. This is because trailers may be hauled by autonomously or manually driven tractors, and a legacy may not have onboard sensing equipment to detect or log information about its tires. Nonetheless, as discussed further below, the tires on a trailer may be examined and evaluated by the autonomous vehicle prior to beginning a trip.

Readings received from the TPMS module(s) from the tires can be continuously or intermittently obtained and stored by the system for analysis. Direct TPMS measurements can be made with sensors in the wheels, or indirect measurements can be taken based on, e.g., the deceleration system's wheel speed sensors. The TPMS information may be sent to the control system (e.g., processors 204 of Fig. 2A or the ECU 242 of Fig. 2B). A repeater or signal extender may be employed to replay TPMS information from tires along the trailer (e.g., the rearmost tires) to the control system.

In addition or alternatively, a combination of camera and lidar could be employed to perform real time measurement of the tires. For instance, optical cameras could be useful for measurement/deformation estimation. In particular, the observed tire shape combined with a model can be used to evaluate tire health, especially when tire, roadway and ambient temperatures are taken into account, along with longitudinal and lateral acceleration information. Furthermore, infrared cameras can be used to detect tire wear. All of this information may be fed into the model, for instance to identify whether there is a set of triggering factors that may result in a blowout or other tire failure.

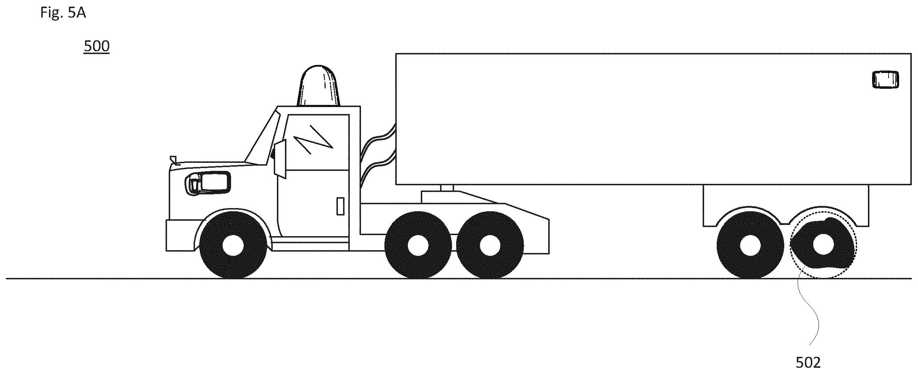

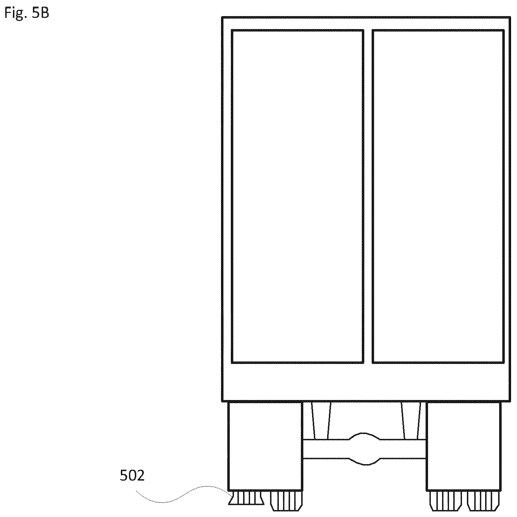

Figs. 5A-B illustrate one example 500 where the system detects a change in a tire 502. As shown in the exaggerated side view of Fig. 5A and the exaggerated rear view of Fig. 5B, the outermost rear left tire of the trailer may have a change in shape, pressurization and/or temperature.

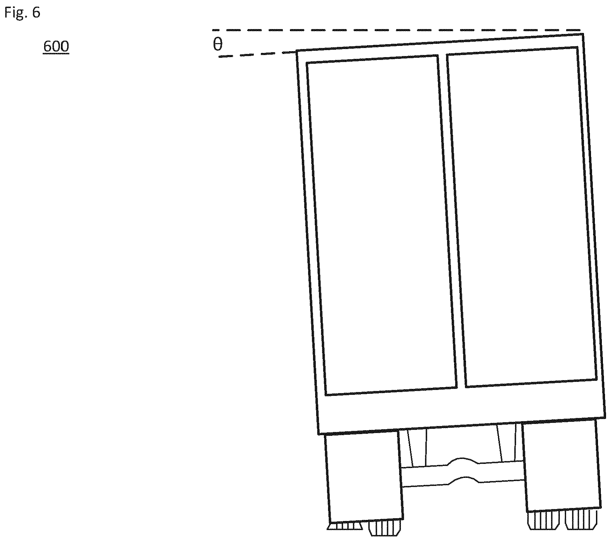

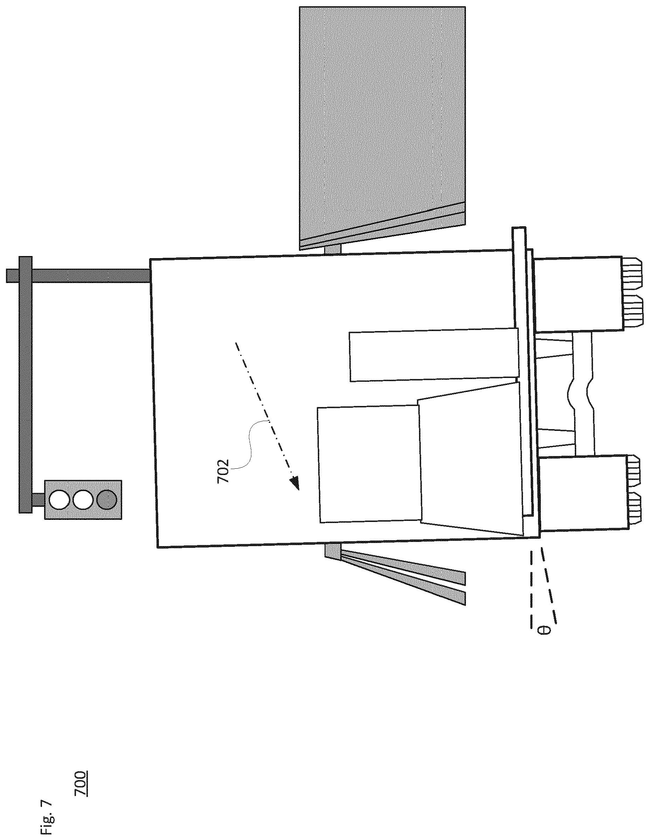

In addition to directly measuring information about the tire, the system may also evaluate aspects of the vehicle itself or the cargo to provide information regarding a (potential) blowout. For instance, Fig. 6 illustrates another example 600, in which a change in tire pressure may cause the trailer to tilt or slew at an angle θ, e.g., between 1-5° (or more or less). And in example 700 of Fig. 7, under-pressurization of one or more tires may cause the cargo within the trailer to move from an initial position to a shifted position (e.g., towards the left) as shown by dash-dot line 702, e.g., in accordance with the angle θ.

In one example, the received TPMS data and other information may be compared in real time with the dynamics data and the model can be updated as the vehicle drives. The updated dynamics model can be used to predict the likelihood of a blowout or other tire failure. The system according to the invention uses the model to quantify that based on the current data for a given tire, in view of upcoming road and optionally additionally in view of upcoming environmental conditions, there is an increased possibility that the tire will fail. Here, for example, the system may evaluate the trailer weight, tire life, location of each tire on the vehicle, temperatures, vehicle speed and/or likelihood of impact with a detected pothole, debris or other obstacle to calculate a likelihood or probability of tire failure. In response, the vehicle may modify how it drives or take other action, which is discussed further below.

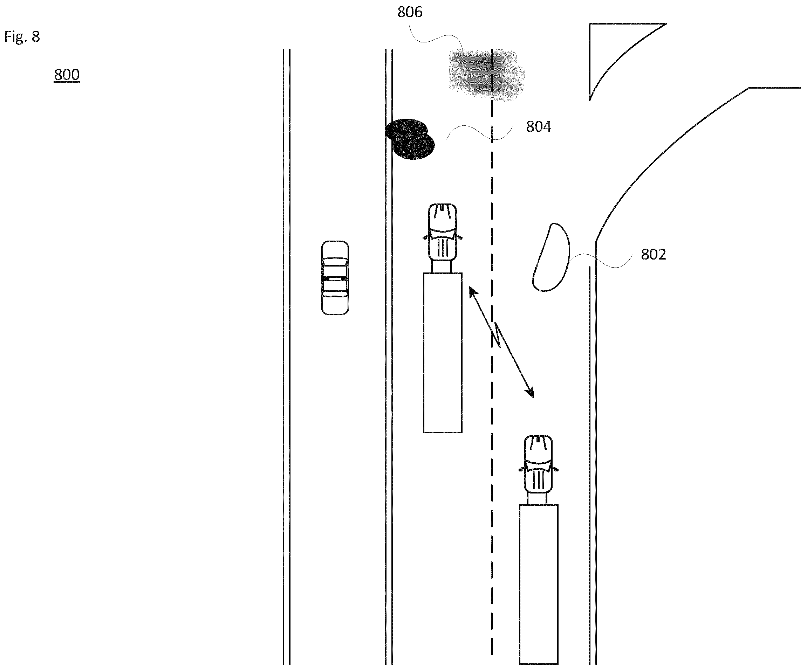

Fig. 8 illustrates an example 800 in which there may be a pothole 802, debris 804 or other obstacle 806. Depending on the obstacle and other factors, any of these could lead to a blowout, slow leak, or other failure of one or more tires. According to one aspect, upon detection of the obstacle the onboard system may attempt to classify it (e.g., pothole v. debris v. leaf pile), for instance by comparing the obstacle to a type stored in memory. Even though the system may classify an obstacle, information observed or otherwise know about the obstacle may be highly relevant to whether it can increase the likelihood of a blowout. For instance, the specific shape (e.g., overall area, edge type, etc.) and depth of the pothole (e.g., 2 cm v. 10 cm) would make a big difference. The sharpness of the edge, the material of the road, etc. can all factor into the evaluation of the pothole (or other obstacle). As shown by the double arrow in Fig. 8, information obtained by one vehicle may be passed on to other vehicles about the obstacle. For instance, a leading truck may use sensor information to detect the size, shape and depth of a pothole. Alternatively or additionally, the leading truck may have driven over the obstacle or observed how another vehicle responded when driving over the obstacle. This obtained information may be transmitted directly or indirectly to one or more nearby vehicles on the roadway, or to a central system such as a remote assistance service for dissemination to other vehicles. As a result, potholes and other obstacles may be added to a map, for example on an obstacle or hazard layer of a roadgraph or other electronic map. Vehicles would then be able to identify the pothole based on its presence in the map.

If such detailed information is not available, then a corrective driving decision may be made once it is established that the obstacle is a pothole. In contrast, if specific information about the obstacle is known, the control system (e.g., a planner module) may determine whether it is safe to drive over some or all of the obstacle without a blowout occurring. Here, whether the obstacle is "safe" could mean whether it is (a) something that can damage the tires, (b) something that can cause controller issues leading to fault condition in the autonomous driving system, (c) something that can damage the underside of the vehicle's chassis, (d) something that could be dislodged by a tire when driven over, or some other potential safety issue. By way of example, with regard to situation (a), the system may calculate or otherwise estimate the obstacle's impact on a tire based on knowledge of the roadway (e.g., surface material), measurement of, for instance, the depth of pothole, height of debris and/or density of the material of the debris (e.g., using the onboard perception system), type of debris (e.g., concrete block v. plastic bag), and comparing this information to a stored database of obstacles that have caused issues in the past. In one example the database may be associated with a machine learning model for obstacles that is trained based on one or more of the above factors.

In one example, if the vehicle operating in an autonomous driving mode runs over a pothole or encounters another obstacle or problematic condition, it may pull over and come to a stop on the road shoulder to monitor the tire pressure for some set amount of time before continuing (e.g., 1-5 minutes, or more or less). Alternatively, the system may monitor the tire pressure without pulling over. In this case, if the monitoring indicates a decrease in pressure that falls below some threshold, the vehicle could then pull over or take some other corrective action. As described above with regard to example 600 of Fig. 6, the vehicle sensors may detect that the truck is tilting slightly to one side (e.g., 0.5 - 3.0° or more or less) or that one side is lower than the other (e.g., 1-5 cm lower). The system could also monitor cargo distribution as described above with regard to example 700 of Fig. 7, which may help indicate whether the trailer is not level due to tire issues. In another example, instead of pulling over, the vehicle's control system could monitor tire pressure from onboard sensors, e.g., via TPMS, lidar and/or cameras.

In addition or alternatively, as noted above with regard to Fig. 8, the vehicle may receive alerts from across an autonomous truck fleet about locations where tire blowout have occurred on a certain route. This information may be received directly from other nearby trucks or from a backend system. In one scenario, the fleet may share information about conditions that might increase the risk of tire blowout or other tire failure. This can include using a shared database or a map to which vehicles can append information (e.g., in real time or upon reaching a destination or way point) and then use this database to inform routing decisions or decisions about which lane to drive in.

The onboard system or a backend system such as a remote assistance service may also track the status of each tire based on total miles, cargo weight, location of tire on vehicle (tractor v. trailer, front v. rear, right side v. left side, inner tire v. outer tire, etc.) and determine when that particular tire should be replaced or rotated are part of a predictive maintenance approach.

According to another aspect of the technology, before the truck or other vehicle departs on a trip, baseline information for the set of tires may be obtained. For example, a tire check may be performed in order to obtain baseline information for the tires, such as tire pressure, balance, internal temperature, tread wear, tire shape, rim condition, etc. The baseline information can be used as a reference to compare against future tire checks, and input into a model in order to predict tire failures. Additional checks of any or all of these factors may be performed during the trip, for instance periodically (e.g., every 1-5 miles or every 1-10 minutes, or more or less) or upon certain criteria or thresholds being met (e.g., tire or ambient temperature exceeding 100°, tire pressure exceeding recommended pressure by more than 5-10%, etc.). Furthermore, data from multiple prior pre-trip checks can be used to update the baseline information, for instance to take into account changes in weather conditions (e.g., warmer or colder temperatures) and other factors. For example, early morning pre-trip checks in the winter may start with a colder temperature and/or lower pressure than late afternoon pre-trip checks during the summer months. Having data regarding these different environmental conditions can be used to adjust the baseline accordingly, such as to indicate that the pressure prior to a morning trip in the winter may be within a permissible range even though it is lower than a nominal pressure at some other time of year (e.g., 32 psi versus 34 psi).

In addition to receiving information from the TPMS and other sensors as discussed above, the vehicle's perception system may also detect issues along the roadway such as a pothole, debris or other obstacle as noted above. The onboard system may additionally monitor lateral control data or other pose information to detect early signs of the truck not following the expected trajectory and/or speed. Cameras or lidar may be used to view the wheels of the tractor and trailer, for instance by using sensors that are part of the vehicle's perimeter sensing system. Depending on the sensor configuration, sensors arranged to detect objects external to the vehicle can also be used to collect tire-related information. For instance, lidar or camera sensors could also be used to estimate the radius of the tires on the trailer (or any tires that do not have TPMS) in order to further evaluate the tire status.

In one scenario, the front (steering) wheels on the tractor are likely to be most problematic if they blow out, so the camera or lidar may be focused primarily on those. By way of example, such sensors may capture data at a frequency of 5-20 Hz. Sensors focused on other tires may have the same capture rate or a lower rate of, e.g., 0.5 - 4 Hz.

The vehicle may also perform certain driving maneuvers to obtain additional data about the tires. This can include, e.g., a series of turns or small movements that provide a more complete picture of the tires) as the vehicle is traveling along the route.

All of this information can be used to build or update the tire dynamics model. As noted above, the model can be used to predict the likelihood of a blowout or other failure. This may be a likelihood of a blowout in general, or the likelihood that a specific tire may fail. In either case, should the likelihood of failure exceed a threshold prediction level, the vehicle is able to take one or more actions. If the vehicle has not yet departed on the trip or is stopped, it may request a tire change or modification of the cargo weight distribution, or it may alter the route and/or departure time to avoid roadway or environmental conditions that are predicted to contribute to a failure. If the vehicle is currently driving, the vehicle may make changes to driving operations based on the threshold prediction level, such as lowering its speed, applying the brakes, changing lanes, altering the route, putting its hazard lights on, etc.

For instance, using the available information about the tires' status and other factors, the truck's planner system may cause the vehicle to change lanes or take other corrective action to avoid running over a pothole or other obstacle. For instance, if potholes or other issues are included in the map (e.g., in an obstacle or hazard layer of the map), the onboard planner or backend system may alter the route or cause the vehicle to change lanes to avoid the pothole altogether. However, there may not be time or the ability to make significant driving modifications (e.g., changing lanes), for instance due to late detection of the obstacle, traffic conditions, etc. Thus, in one example the planner or other onboard system may cause the vehicle to nudge over within a lane (e.g., by 2-20 cm) to minimize the pothole (or debris) impact, so that the pothole or debris passes between the tires. The vehicle could also slow down, providing additional time to gather information about the obstacle or take corrective action. By way of example, the corrective action may include (i) adjusting the position of the autonomous vehicle within a lane to minimize possible impact with an obstacle on the portion of the roadway, (ii) pulling over and monitoring tire pressure for a first selected period of time, (iii) continuing driving and performing enhanced monitoring of the at least one tire for a second selected period of time, (iv) evaluating whether the at least one tire is safety critical for a current driving operation, (v) changing a route of the autonomous vehicle, and/or (vi) notifying a remote service or another vehicle about either the roadway conditions for the portion of a roadway or the environmental condition

In addition to sensors capturing information about the tires' status in real time, a machine learning model for such sensor information could be applied to detect a blowout or other failure condition. In one example, the system (either onboard or remote) can construct an anomaly detection model. This approach would look for events that are outliers from the common pattern/events. In this case, it can include looking for tires that currently appear different from how they are expected to look. In another example, a supervised machine learning model can be trained on either still images or short video segments of the tire. Here, the model can use as inputs any or all of the signals mentioned above (e.g., weather conditions, whether the vehicle went over a pothole, whether the vehicle is following lateral trajectory precisely, TPMS measurements, etc.). For both cases, the system can bring a human into the loop should one or more threshold conditions for a failure be met. That is, when the model detects something, the vehicle is able to notify remote assistance urgently so that a trained human can also evaluate the situation before the vehicle takes corrective action.

In one scenario, when the on-board and/or remote assistance system determines that the vehicle needs to take corrective action, the control system may cause the driving system to perform selected operations, e.g. accelerate, rather than brake to maintain lane position. Using the above approaches, the vehicle may be able to immediately determine that a blowout or other failure has occurred (e.g., within 0.5-2 seconds, or more or less). This rapid detection allows the onboard system to take correctly action more quickly and precisely than human drivers might be able to. In addition, the system may determine which particular tire failed, whether that tire is safety critical (e.g., a steering tire in the front of the tractor or an interior rear tire of the trailer), and determine whether an immediate pullover is required or how long the vehicle can travel before pulling over. This may also include evaluating whether to make changes to the planned route, driving speed, etc. Thus, for a significant failure such as a blowout, the autonomous driving system may cause the driving system to make steering, braking and/or acceleration adjustments to achieve a desired lane position or otherwise maintain control of the vehicle. Once the vehicle is controller, it may pull over as soon as it is safe to do so. At this point, the vehicle can call for service.

In one scenario, the vehicle can pull over on the shoulder and call for service (e.g., via a remote assistance service). This may also be done in conjunction with alerting other vehicles (directly or indirectly) of the situation. Furthermore, if the system is able to determine the factor(s) that caused the blowout (e.g., excessive temperature + pothole + high mileage tire), this information may also be communicated to warn other vehicles so that they can make adjustments to reduce the likelihood of a blowout of one of their tires.

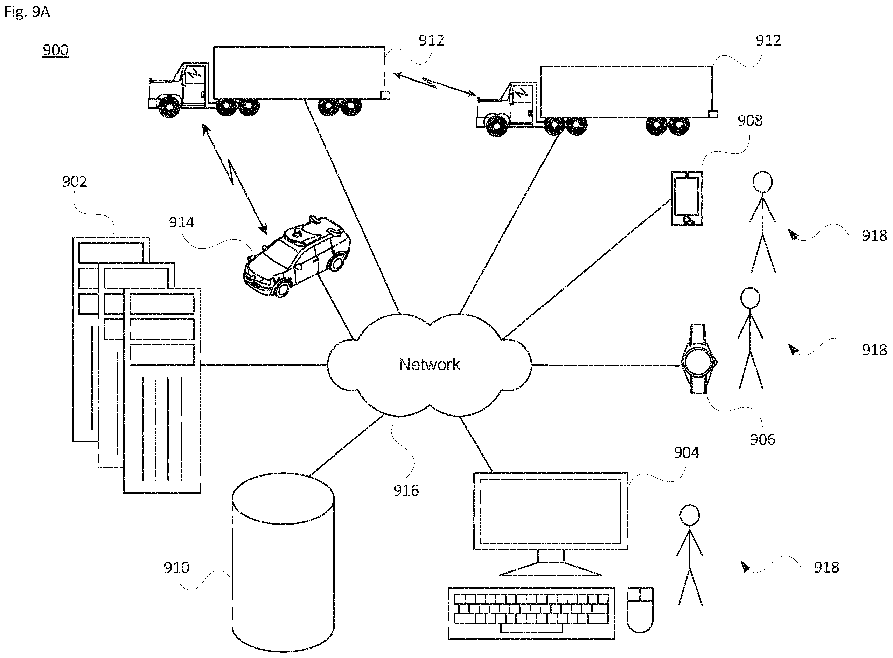

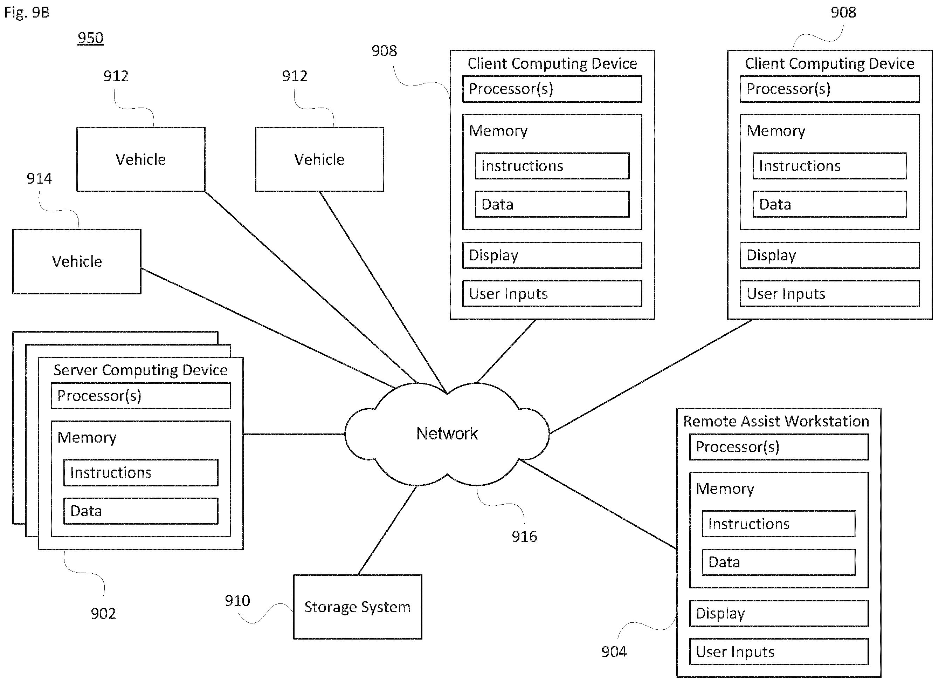

The vehicle's on-board control system may communicate with remote assistance, as well as with service personnel and human drivers or passengers of the vehicle. One example of this is shown in Figs. 9A and 9B. In particular, Figs. 9A and 9B are pictorial and functional diagrams, respectively, of an example arrangement 900 that includes a plurality of computing devices 902, 904, 906, 908 and a storage system 910 connected via a network 916. System 900 also includes vehicles 912 and 914, which may be configured the same as or similarly to vehicles 100 and 150 of Figs. 1A-B and 1C. Vehicle 912 and/or vehicles 914 may be part of a fleet of vehicles, for instance as a fleet of cargo vehicles. Although only a few vehicles and computing devices are depicted for simplicity, a typical arrangement may include significantly more.

As shown in Fig. 9B, each of computing devices 902, 904, 906 and 908 may include one or more processors, memory, data and instructions. Such processors, memories, data and instructions may be configured similarly to the ones described above with regard to Fig. 2A. The various computing devices and vehicles may communication via one or more networks, such as network 916. The network 916, and intervening nodes, may include various configurations and protocols including short range communication protocols such as Bluetooth^{™}, Bluetooth LE, the Internet, World Wide Web, intranets, virtual private networks, wide area networks, local networks, private networks using communication protocols proprietary to one or more companies, Ethernet, WiFi and HTTP, and various combinations of the foregoing. Such communication may be facilitated by any device capable of transmitting data to and from other computing devices, such as modems and wireless interfaces. Alternatively or in addition, the vehicles may be able to communicate directly with any of devices 902, 904, 906 and/or 908.

In one example, computing device 902 may include one or more server computing devices having a plurality of computing devices, e.g., a load balanced server farm, that exchange information with different nodes of a network for the purpose of receiving, processing and transmitting the data to and from other computing devices. For instance, computing device 902 may include one or more server computing devices that are capable of communicating with the computing devices of vehicles 912 and/or 914, as well as computing devices 904, 906 and 908 via the network 916. For example, vehicles 912 and/or 916 may be a part of a fleet of vehicles that can be dispatched by a server computing device to various locations. In this regard, the computing device 902 may function as a dispatching server computing system which can be used to dispatch vehicles to different locations in order to pick up and deliver cargo and/or to pick up and drop off passengers. In addition, vehicles 912 and/or 914 may also directly or indirectly with other fleet vehicles, service vehicles, and the like. In addition, server computing device 902 may use network 916 to transmit and present information to a user of one of the other computing devices or a passenger of a vehicle. In this regard, computing devices 904, 906 and 908 may be considered client computing devices.

As shown in Fig. 9A, computing devices 904, 906 and 908 may be computing devices intended for use by respective users 918, and have all of the components normally used in connection with a personal computing device including a one or more processors (e.g., a central processing unit (CPU)), memory (e.g., RAM and internal hard drives) storing data and instructions, a display (e.g., a monitor having a screen, a touch-screen, a projector, a television, or other device such as a smart watch display that is operable to display information), and user input devices (e.g., a mouse, keyboard, touchscreen or microphone). The computing devices may also include a camera for recording video streams, speakers, a network interface device, and all of the components used for connecting these elements to one another.

Although these computing devices may each comprise a full-sized personal computing device, they may alternatively comprise mobile computing devices capable of wirelessly exchanging data with a server over a network such as the Internet. By way of example only, computing device 908 may be mobile phones or devices such as a wireless-enabled PDA, a tablet PC, a wearable computing device (e.g., a smartwatch), or a netbook that is capable of obtaining information via the Internet or other networks.

In some examples, computing device 904 may be a remote assistance workstation used by an administrator or operator to communicate with vehicles 912 and/or 914. Although only a single remote assistance workstation 904 is shown in Figs. 9A-B, any number of such workstations may be included in a given system. Moreover, although workstation 904 is depicted as a desktop-type computer, this device may include various types of personal computing devices such as laptops, netbooks, tablet computers, etc.

Storage system 910 can be of any type of computerized storage capable of storing information accessible by the server computing devices 902, such as a hard-drive, memory card, ROM, RAM, DVD, CD-ROM, flash drive and/or tape drive. In addition, storage system 910 may include a distributed storage system where data is stored on a plurality of different storage devices which may be physically located at the same or different geographic locations. Storage system 910 may be connected to the computing devices via the network 916 as shown in Figs. 9A-B, and/or may be directly connected to or incorporated into any of the computing devices.

Storage system 910 may store various types of information. For instance, the storage system 910 may also store autonomous vehicle control software which is to be used by vehicles, such as vehicles 912 or 914, to operate such vehicles in an autonomous driving mode. Alternatively or additionally, storage system 910 may maintain various types of information regarding the vehicles, including tire and cargo-related information. This information may be retrieved or otherwise accessed by a server computing device, such as one or more server computing devices 902, in order to perform some or all of the features described herein.

As discussed above, the self-driving vehicle may communicate with a remote human who can provide additional assistance. For instance, should the vehicle be unable to determine what to do, it may send a request for support to a remote human operator. The request for support may include a query and/or data which may include raw and/or processed sensor data, vehicle log data and the like. For instance, it may include one or more still images, video and/or an audio segment(s) relating to the tires.

In response, the remote assistance service can provide support to the vehicle, e.g., to analyze the received data in order to determine a likelihood of a blowout. The storage system 910 may maintain a database of information associated with different types of tires and/or obstructions. This information can be used remotely, e.g., by remote assistance computer 904 or server 902 to perform offboard analysis by comparing information received from the perception system against what is in the database.

In a situation where there are passengers, the vehicle or remote assistance may communicate directly or indirectly with the passengers' client computing device. Here, for example, information may be provided to the passengers regarding a blowout situation, actions being taken or to be taken in response to the situation, etc.

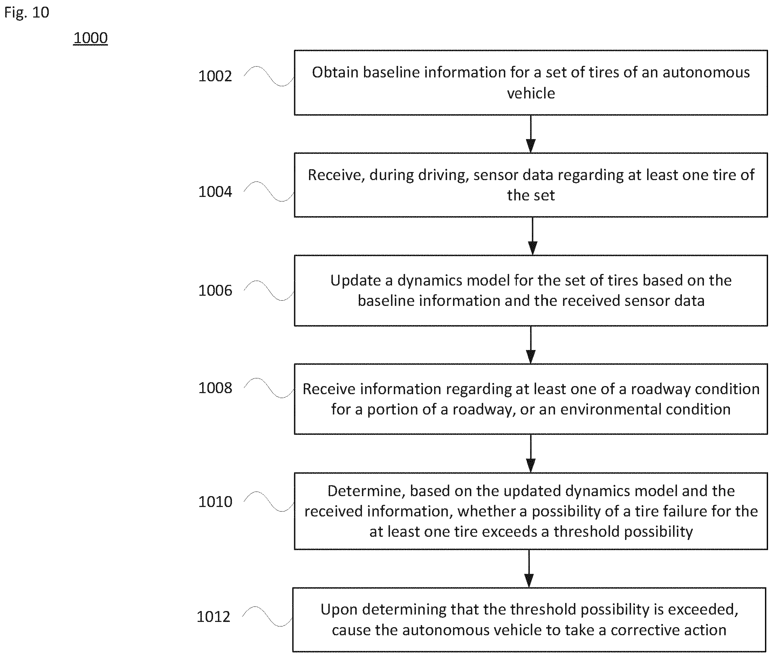

Fig. 10 illustrates an example 1000 of a method of operating a vehicle in an autonomous driving mode in view of the above. At block 1002, one or more processors of the autonomous vehicle obtain baseline information for a set of tires of the autonomous vehicle. At block 1004, the one or more processors receive, during driving of the autonomous vehicle, sensor data regarding at least one tire of the set of tires. At block 1006, a dynamics model for the set of tires is updated based on the baseline information and the received sensor data. At block 1008, the one or more processors receive information regarding at least one of (i) a roadway condition for a portion of a roadway, or (ii) an environmental condition. At block 1010, the one or more processors determine, based on the updated dynamics model and the received information, whether a possibility of a tire failure for the at least one tire in the set exceeds a threshold possibility. And in block 1012, upon determining that the threshold possibility is exceeded, the one or more processors cause the autonomous vehicle to take a corrective action.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements. The processes or other operations may be performed in a different order or simultaneously, unless expressly indicated otherwise herein.

## Claims

1. A method of performing tire evaluation for an autonomous vehicle, the method comprising:
obtaining (1002), by one or more processors of the autonomous vehicle (150, 100), baseline information for a set of tires of the autonomous vehicle;
receiving (1004), by the one or more processors during driving of the autonomous vehicle, sensor data regarding at least one tire of the set of tires;
updating (1006) a dynamics model for the set of tires based on the baseline information and the received sensor data;
receiving (1008), by the one or more processors, information regarding a roadway condition for a portion of a roadway wherein the received information includes an indication that the autonomous vehicle will encounter an obstacle (802, 804, 806) on the portion of the roadway;
determining (1010) by the one or more processors, based on the updated dynamics model in view of the received information, whether a possibility of a tire failure for the at least one tire in the set exceeds a threshold possibility; and
upon determining that the threshold possibility is exceeded, the one or more processors causing (1012) the autonomous vehicle to take a corrective action.

2. The method of claim 1, wherein the obstacle is a pothole (802).

3. The method of claim 1 or claim 2, wherein the received information further includes information regarding an environmental condition.

4. The method of claim 3, wherein the received information regarding the environmental condition is an ambient temperature.

5. The method of any preceding claim, wherein the sensor data regarding the at least one tire is pressure data, temperature data or shape data.

6. The method of claim 5, wherein the pressure data is obtained from a tire pressure monitoring system.

7. The method of any preceding claim, wherein the sensor data regarding the at least one tire is received from a camera or lidar sensor of the autonomous vehicle.

8. The method of claim 7, wherein the sensor data includes a thermal image from an infrared camera of the autonomous vehicle.

9. The method of any preceding claim, wherein the corrective action includes adjusting a position of the autonomous vehicle within a lane to minimize possible impact with an obstacle on the portion of the roadway.

10. The method of any preceding claim, wherein the possibility of a tire failure is one of a blowout, slow leak, tread damage, sidewall damage or rim damage.

11. The method of any preceding claim, further comprising:
detecting a failure of the at least one tire of the set of tires; and
in response to detecting the failure, the corrective action is selected from the group consisting of:
adjusting a position of the autonomous vehicle within a lane to minimize possible impact with an obstacle on the portion of the roadway;
pulling over and monitoring tire pressure for a first selected period of time;
continuing driving and performing enhanced monitoring of the at least one tire for a second selected period of time;
evaluating whether the at least one tire is safety critical for a current driving operation;
changing a route of the autonomous vehicle; or
notifying a remote service or another vehicle about the roadway conditions for the portion of a roadway.

12. The method of any preceding claim, wherein obtaining the baseline information includes performing one or more driving maneuvers to obtain data about the set of tires.

13. The method of any preceding claim, further comprising training the dynamics model based on tire information received from a plurality of other autonomous vehicles.

14. A control system (202, 302) comprising: memory (206, 306) storing a dynamics model of a vehicle configured to operate in an autonomous driving mode; and one or more processors operatively coupled to the memory, the one or more processors being configured to perform the method of any one of claims 1 to 13.

15. A vehicle (150, 100) configured to operate in an autonomous driving mode, the vehicle comprising: a driving system (200, 300) including a steering subsystem (216, 316), an acceleration subsystem (214, 314) and a deceleration subsystem (212, 312) to control driving of the vehicle in the autonomous driving mode; a perception system (224, 324) including one or more sensors (232, 332) configured to detect objects in an environment external to the vehicle; a positioning system (222, 332) configured to determine a current position of the vehicle; and a control system according to claim 14, the control system operatively coupled to the driving system, the perception system and the positioning system.

## Patentansprüche

1. Verfahren für ein Durchführen einer Reifenbewertung für ein autonomes Fahrzeug, das Verfahren umfassend:
Erhalten (1002), durch einen oder mehrere Prozessoren des autonomen Fahrzeugs (150, 100), von Ausgangswertinformationen für einen Satz von Reifen des autonomen Fahrzeugs;
Empfangen (1004,) durch den einen oder die mehreren Prozessoren während des Fahrens des autonomen Fahrzeugs, von Sensordaten, die mindestens einen Reifen des Satzes von Reifen betreffen;
Aktualisieren (1006) eines Dynamikmodells für den Satz von Reifen basierend auf den Ausgangswertinformationen und den empfangenen Sensordaten;
Empfangen (1008), durch den einen oder mehrere Prozessoren, von Informationen bezüglich eines Fahrbahnzustands für einen Abschnitt einer Fahrbahn, wobei die empfangenen Informationen eine Angabe umfassen, dass das autonome Fahrzeug auf ein Hindernis (802, 804, 806) auf dem Abschnitt der Fahrbahn treffen wird;
Bestimmen (1010) durch den einen oder die mehreren Prozessoren, basierend auf dem aktualisierten Dynamikmodell im Hinblick auf die empfangenen Informationen, ob eine Möglichkeit eines Reifenausfalls für den mindestens einen Reifen in dem Satz eine Schwellenmöglichkeit überschreitet; und
bei Bestimmen, dass die Schwellenmöglichkeit überschritten ist, veranlasst der eine oder veranlassen die mehreren Prozessoren (1012) das autonome Fahrzeug, eine Korrekturmaßnahme zu ergreifen.

2. Verfahren nach Anspruch 1, wobei das Hindernis ein Schlagloch (802) ist.

3. Verfahren nach Anspruch 1 oder Anspruch 2, wobei die empfangenen Informationen ferner Informationen bezüglich einer Umgebungsbedingung umfassen.

4. Verfahren nach Anspruch 3, wobei die empfangenen Informationen über die Umgebungsbedingung eine Umgebungstemperatur sind.

5. Verfahren nach einem der vorhergehenden Ansprüche, wobei die Sensordaten bezüglich des mindestens einen Reifens Druckdaten, Temperaturdaten oder Formdaten sind.

6. Verfahren nach Anspruch 5, wobei die Druckdaten von einem Reifendrucküberwachungssystem erhalten werden.

7. Verfahren nach einem der vorhergehenden Ansprüche, wobei die Sensordaten bezüglich des mindestens einen Reifens von einem Kamera- oder Lidarsensor des autonomen Fahrzeugs empfangen werden.

8. Verfahren nach Anspruch 7, wobei die Sensordaten ein Wärmebild von einer Infrarotkamera des autonomen Fahrzeugs umfassen.

9. Verfahren nach einem der vorhergehenden Ansprüche, wobei die Korrekturmaßnahme ein Anpassen einer Position des autonomen Fahrzeugs innerhalb einer Fahrspur umfasst, um einen möglichen Zusammenstoß mit einem Hindernis auf dem Abschnitt der Fahrbahn zu minimieren.

10. Verfahren nach einem der vorhergehenden Ansprüche, wobei die Möglichkeit eines Reifenschadens eines von einem Reifenplatzer, einem langsamen Leck, einem Laufflächenschaden, einem Seitenwandschaden oder einem Felgenschaden ist.

11. Verfahren nach einem der vorhergehenden Ansprüche, ferner umfassend:
Erkennen eines Ausfalls des mindestens einen Reifens des Satzes von Reifen; und
in Reaktion auf das Erkennen des Ausfalls wird die Korrekturmaßnahme ausgewählt aus der Gruppe bestehend aus:
Anpassen einer Position des autonomen Fahrzeugs innerhalb einer Fahrspur, um einen möglichen Aufprall auf ein Hindernis in dem Abschnitt der Fahrbahn zu minimieren;
Anhalten und Überwachen des Reifendrucks für einen ersten, ausgewählten Zeitraum;
Fortsetzen der Fahrt und Durchführen eines erweiterten Überwachens des mindestens einen Reifens für einen zweiten, ausgewählten Zeitraum;
Bewerten, ob der mindestens eine Reifen für einen aktuellen Fahrbetrieb sicherheitskritisch ist;
Ändern einer Strecke des autonomen Fahrzeugs; oder
Benachrichtigen eines entfernten Dienstes oder eines anderen Fahrzeugs über den Straßenzustand für den Abschnitt einer Fahrbahn.

12. Verfahren nach einem der vorhergehenden Ansprüche, wobei Erhalten der Ausgangswertinformationen ein Durchführen eines oder mehrerer Fahrmanöver umfasst, um Daten über den Satz von Reifen zu erhalten.

13. Verfahren nach einem der vorhergehenden Ansprüche, ferner umfassend Trainieren des Dynamikmodells basierend auf den von einer Vielzahl von anderen autonomen Fahrzeugen empfangenen Reifeninformationen.

14. Steuersystem (202, 302), umfassend:
Speicher (206, 306), der ein Dynamikmodell eines Fahrzeugs speichert, das konfiguriert ist, in einem autonomen Fahrmodus zu arbeiten; und
einen oder mehrere Prozessoren, die mit dem Speicher wirkgekoppelt sind, der eine oder die mehreren Prozessoren konfiguriert sind, um das Verfahren nach einem der Ansprüche 1 bis 13 durchzuführen.

15. Fahrzeug (150, 100), konfiguriert für einen Betrieb in einem autonomen Fahrmodus, das Fahrzeug umfassend:
ein Fahrsystem (200, 300), einschließlich eines Lenkungsteilsystems (216, 316), eines Beschleunigungsteilsystems (214, 314) und eines Verzögerungsteilsystems (212, 312) für ein Steuern des Fahrens des Fahrzeugs in dem autonomen Fahrmodus;
ein Wahrnehmungssystem (224, 324), einschließlich eines oder mehrerer Sensoren (232, 332), die konfiguriert sind, Objekte in einer Umgebung außerhalb des Fahrzeugs zu erkennen;
ein Positionierungssystem (222, 332), das konfiguriert ist, eine aktuelle Position des Fahrzeugs zu bestimmen; und
ein Steuersystem nach Anspruch 14, wobei das Steuersystem mit dem Antriebssystem, dem Wahrnehmungssystem und dem Positionierungssystem wirkgekoppelt ist.

## Revendications

1. Procédé de réalisation d'une évaluation de pneu pour un véhicule autonome, le procédé comprenant :
l'obtention (1002), par un ou plusieurs processeurs du véhicule autonome (150, 100), d'informations de référence pour un ensemble de pneus du véhicule autonome ;
la réception (1004), par les un ou plusieurs processeurs pendant la conduite du véhicule autonome, de données de capteur concernant au moins un pneu de l'ensemble de pneus ;
la mise à jour (1006) d'un modèle dynamique pour l'ensemble de pneus sur la base des informations de référence et des données de capteur reçues ;
la réception (1008), par les un ou plusieurs processeurs, d'informations concernant une condition de chaussée pour une portion d'une chaussée dans lequel les informations reçues comportent une indication selon laquelle le véhicule autonome rencontrera un obstacle (802, 804, 806) sur la portion de la chaussée ;
le fait de déterminer (1010), par les un ou plusieurs processeurs, sur la base du modèle dynamique mis à jour compte tenu des informations reçues, si une possibilité de défaillance de pneu pour l'au moins un pneu dans l'ensemble dépasse une possibilité seuil ; et
lorsqu'il est déterminé que la possibilité seuil est dépassée, le fait que les un ou plusieurs processeurs amènent (1012) le véhicule autonome à prendre une mesure corrective.

2. Procédé selon la revendication 1, dans lequel l'obstacle est un nid de poule (802).

3. Procédé selon la revendication 1 ou la revendication 2, dans lequel les informations reçues comportent en outre des informations concernant une condition environnementale.

4. Procédé selon la revendication 3, dans lequel les informations reçues concernant la condition environnementale sont une température ambiante.

5. Procédé selon l'une quelconque des revendications précédentes, dans lequel les données de capteur concernant l'au moins un pneu sont des données de pression, des données de température ou des données de forme.

6. Procédé selon la revendication 5, dans lequel les données de pression sont obtenues à partir d'un système de surveillance de pression de pneus.

7. Procédé selon l'une quelconque des revendications précédentes, dans lequel les données de capteur concernant l'au moins un pneu sont reçues depuis une caméra ou un capteur lidar du véhicule autonome.

8. Procédé selon la revendication 7, dans lequel les données de capteur comportent une image thermique provenant d'une caméra infrarouge du véhicule autonome.

9. Procédé selon l'une quelconque des revendications précédentes, dans lequel la mesure corrective comporte le réglage d'une position du véhicule autonome au sein d'une voie pour réduire au minimum un impact possible avec un obstacle sur la portion de la chaussée.

10. Procédé selon l'une quelconque des revendications précédentes, dans lequel la possibilité d'une défaillance de pneu est l'une parmi une rupture, une fuite lente, un endommagement de la bande de roulement, un endommagement du flanc ou un endommagement de la jante.

11. Procédé selon l'une quelconque des revendications précédentes, comprenant en outre :
la détection d'une défaillance de l'au moins un pneu de l'ensemble de pneus ; et
en réponse à la détection de la défaillance, la mesure corrective est choisie dans le groupe constitué de :
régler une position du véhicule autonome au sein d'une voie pour réduire au minimum un impact possible avec un obstacle sur la portion de la chaussée ;
se ranger sur le côté et surveiller la pression des pneus pendant une première période choisie ;
poursuivre la conduite et réaliser une surveillance renforcée de l'au moins un pneu pendant une deuxième période choisie ;
évaluer si l'au moins un pneu est critique pour la sécurité d'une opération de conduite en cours ;
changer un itinéraire du véhicule autonome ; ou
avertir un service à distance ou un autre véhicule des conditions de chaussée pour la portion d'une chaussée.

12. Procédé selon l'une quelconque des revendications précédentes, dans lequel l'obtention des informations de référence comporte la réalisation d'une ou plusieurs manœuvres de conduite pour obtenir des données concernant l'ensemble de pneus.

13. Procédé selon l'une quelconque des revendications précédentes, comprenant en outre l'entraînement du modèle dynamique sur la base d'informations de pneu reçues en provenance d'une pluralité d'autres véhicules autonomes.

14. Système de commande (202, 302) comprenant :
une mémoire (206, 306) stockant un modèle dynamique d'un véhicule configuré pour fonctionner dans un mode de conduite autonome ; et
un ou plusieurs processeurs couplés de manière fonctionnelle à la mémoire, les un ou plusieurs processeurs étant configurés pour réaliser le procédé de l'une quelconque des revendications 1 à 13.

15. Véhicule (150, 100) configuré pour fonctionner dans un mode de conduite autonome, le véhicule comprenant :
un système de conduite (200, 300) comportant un sous-système de direction (216, 316), un sous-système d'accélération (214, 314) et un sous-système de décélération (212, 312) pour commander la conduite du véhicule dans le mode de conduite autonome ;
un système de perception (224, 324) comportant un ou plusieurs capteurs (232, 332) configurés pour détecter des objets dans un environnement externe au véhicule ;
un système de positionnement (222, 332) configuré pour déterminer une position actuelle du véhicule ; et
un système de commande selon la revendication 14, le système de commande étant couplé de manière fonctionnelle au système de conduite, au système de perception et au système de positionnement.
